# EUROPEAN PATENT SPECIFICATION

(11) **EP 3 080 215 B1**
(45) Date of publication and mention of the grant of the patent: **05.05.2021**
(21) Application number: 14812174.2
(22) Date of filing: 08.12.2014
(51) Int. Cl.: C09D 7/61, C09D 5/22

(54) **MARKED LAYER STRUCTURE, PROCESS FOR PRODUCING IT AND USE THEREOF**
MARKIERTE SCHICHTSTRUKTUR, VERFAHREN ZUR HERSTELLUNG DAVON UND VERWENDUNG DAVON
STRUCTURE DE COUCHE MARQUÉE, SON PROCÉDÉ DE PRODUCTION ET SON UTILISATION

(30) Priority: 10.12.2013 DE 102013020391
(43) Date of publication of application: 19.10.2016
(73) Proprietor: Polysecure GmbH, 79108 Freiburg (DE)
(72) Inventor: BAQUE, Thomas, 79108 Freiburg (DE); MOESSLEIN, Jochen, 79100 Freiburg (DE)
(74) Representative: Scholz, Volker
(86) International application number: PCT/EP2014/076833
(87) International publication number: WO 2015/086497

(56) References cited:
- WO-A1-2010/066237
- DE-A1- 10 200 291
- GB-A- 2 258 660
- US-A- 3 904 562
- US-A- 5 661 197
- US-B2- 8 497 012
- A KIEHL ET AL: "Encapsulated aluminium pigments", PROGRESS IN ORGANIC COATINGS, vol. 37, no. 3-4, 1 December 1999 (1999-12-01), pages 179-183, XP55173690, ISSN: 0300-9440, DOI: 10.1016/S0300-9440(99)00075-2

## Description

The present invention relates to a marked layer structure, a process for producing it and a use thereof.

The coating of metallic and non-metallic surfaces is gaining more and more in importance, especially because this makes it possible to achieve a functionalisation of the surfaces in a simple manner. It is, for example, possible, by attaching certain chemical groups, to make surfaces either wettable with water or alternatively not wettable with water. By applying layers to a metal galvanically, they can be hardened, dyed or protected against corrosion. Similarly, it is possible to chromium-plate plastic surfaces, especially for optical or decorative purposes.

Coating in this context is understood to mean all forms of coating in which a substrate is dipped in a liquid and in this way its surface is modified and/or coated, where an electrochemical or chemical reaction takes place on the surface and/or ions, atoms, molecules or more complex particles dissolved in the liquid, referred to jointly as coating material, are deposited on the surface of the substrate and grow into a new layer or coating.

Coating processes of this kind include electrochemical and chemical coating processes, such as anodic or cathodic dip coating (e.g. for applying corrosion protection material on motor vehicle bodies), electroless nickel-plating (e.g. nickel-plating ABS), chromating (e.g. hard chromium-plating), enamelling (e.g. industrial enamels for containers, pipes etc.), galvanising (e.g. chromium-plating steel, anodising aluminium), phosphating (e.g. conversion layers on steel), hot dipping metals (e.g. hot-dip galvanising), sol-gel coating (e.g. to produce scratch-protection layers made from hybrid polymers on spectacle lenses), dip-coating, zinc-coating or tinning.

Particular importance in this connection is to be attached to the production of wearing layers. Wearing layers are applied to sensitive, expensive and high-value components in order to counter wear on the parts and to ensure the functioning and safety of a plant or machine in general. This allows wear to occur on the less expensive wearing layers and not on the parts themselves, which offers substantial cost savings.

In practice, it is often important to have a simple way of monitoring the wearing of a particular layer, such as a wearing layer, so as to be able to optimise the wear of the coating (and hence of the product itself). Furthermore, the need often arises to check whether the coating has been applied or is present covering a surface completely.

Comparable importance is to be attached to corrosion protection layers, which are intended to protect components and in this way to ensure the functioning of a plant or machine. Precisely with corrosion protection layers, it is important to check whether the layer has been applied covering the whole surface. If a corrosion protection layers has not been applied covering the whole surface, the consequence is substantially faster corrosion of the component, as a result of which the plant or machine can fail at an unexpectedly early stage.

With regard to the use of markers, processes are known for making cracks in a surface visible by markers, for example. In EP 1 062 283 B1, for instance, dye markers are known, which are applied in solution to surfaces. In this case, the dye markers collect above all in cracks and make them visible in the process. The dyes described are, however, chemically very reactive and are not stable in all media. They therefore influence the chemistry of galvanic baths or paints, for example, and are decomposed or converted in such baths. The use of these markers in coatings as described above is therefore not possible.

US 8,497,012 B2 discloses an authenticity mark in the form of a luminescent material which can be provided as encapsulated particles in an ink coating for e.g. an ID document or CD.

It is thus the problem of the present invention to provide a marker for coatings which overcomes the disadvantages of the state of the art, especially one that does not impede electrochemical and chemical coating processes and is not decomposed or converted in those processes and media and can therefore be incorporated in the layers produced by such coating processes and hence enables the possibility of indicating wear or providing evidence that an item is an original.

This problem is solved by a process for producing a marked layer structure, comprising:
a) providing a support;
b) contacting the support with a mixture comprising chemically and/or electrochemically inert particles, in which particles a marking agent is substantially inseparably enclosed by annealing, sintering or melting, whereby the extractability of the marking agent is reduced;
c) electrochemically or chemically coating the support, the inert particles being in-corporated into the layer produced by the coating;
wherein the marking agent is a fluorescent material,
wherein the chemical coating is electroless nickel-plating, chromating, enamelling, phosphating, hot dipping metals, sol-gel coating, zinc-coating or tinning.

It may be contemplated in this context that the inert particles are blended into media needed for coatings for the purposes of the invention. Because of the dispersion in the media, the particles are incorporated into the coating systems as they form, according to their concentration.

The inert particles used are preferably uncharged. It is, however, also conceivable to provide for the particles to have an electric charge. Then, thanks to their orientation in the electric field, even more accurate incorporation into the layer to be produced is possible.

The inert particles may preferably comprise a marker in a molten substrate containing boric acid or borax, as is known from DE 10 201 201 7710.

As a support in accordance with the invention, it is in principle possible to use any surface which is suitable for being coated using the coating processes mentioned, especially by means of galvanic processes. Contemplated in accordance with the invention are, for example, electrochemically inert plastics, metal layers etc.

It is preferably proposed that the mixture is a liquid mixture. The mixture to be used in accordance with the invention may also be referred to as a medium in the context of this disclosure.

It may also be preferably contemplated that the medium contains solvents or dispersants, such as water, and, in order to facilitate electrolytic deposition for example, auxiliary electrolytes where appropriate.

In addition, it is preferably proposed that the particles have a diameter within a range from 0.05-1,000 µm, preferably 1-100 µm, particularly preferably 1-10 µm and even more preferably 0.05-0.2 µm. The term "diameter" here refers to at least one spatial dimension of the particles, preferably all three spatial dimensions.

Also, it may preferably be contemplated that the inert material is transparent. It is particularly preferred that the inert material has a transparency of greater than 90 % in the wavelength range from 300-1,000 nm.

It is also preferred that the inert material is glass and/or ceramic material.

It may particularly preferably be contemplated that the marking agent is a fluorescent material which exhibits Stokes or anti-Stokes fluorescence.

It is preferred in accordance with the invention that the inert particles are distributed in the mixture substantially homogeneously.

In particular, is preferably proposed to enclose fluorescent materials in the form of small particles in a ceramic shell. Using a highly transparent ceramic shell ensures that the intensity of the fluorescence is not reduced.

Especially thanks to ceramic shells of this kind, the chemical inertness of the particles can be enhanced to such an extent that they are not attacked by the media, for example by electroplating baths, and on the other hand that they do not interfere with the chemistry of such media and baths.

Conceivable fluorescent materials are both classic phosphors which exhibit Stokes fluorescence, and also anti-Stokes crystals, which can be produced with a temperature stability of up to 1,700° C and high quantum yields. The anti-Stokes crystals can be excited to fluoresce with a powerful, narrow-band laser diode. The fluorescence *per se* is an indication that a particular marker is present.

The term "inert" is intended to be understood for the purposes of the invention as meaning in particular that an inert material is chemically, especially electrochemically, inert, i.e. in particular that it cannot be decomposed in electrochemical processes or is not generally reactive.

The term "uncharged" is intended to be understood for the purposes of the invention as meaning that an uncharged material either has no charge or has only a charge density which merely causes a charge-induced movement in an electric field which is generally negligible on the time scale of other electrochemical processes. In particular, particles are intended to be understood as uncharged for the purposes of the invention if, in a solution to which an electric field is applied in order to initiate a deposition process, they only move so weakly in the electric field during the deposition process that a homogeneous distribution of the particles in the solution is not changed, is only changed in a negligible manner.

As materials that can be electrochemically deposited for the purposes of the present invention, it is preferable to use metallic electrolytes, i.e. systems comprising a solvent and a metal salt. It is particularly proposed to use water-soluble metal salts such as chlorides, sulphates, nitrates, etc. Suitable conditions for electrochemical deposition (solvents, necessary voltages, reaction vessels used, etc.) can easily be found by a skilled person in the extensive state of the art.

Electrochemical deposition (or galvanisation) in the process of the invention can generally be achieved by any method which is customary in the state of the art, such as anodic oxidation, strip galvanisation, chemical galvanisation via a difference in potential or reducing agents, chromating, pulsed electrodeposition, plastic galvanisation, phosphating, dipping processes, chromium-plating, steel-plating, etc..

The problem of the present invention is also solved by a marked layer structure obtainable according to the process of the invention.

In accordance with the invention, it may preferably be contemplated here that the deposited material containing the particles forms the outer layer of the layer structure.

The particles containing the marking agent may, however, also be incorporated in accordance with the invention into a layer beneath the wearing layer. When the wearing layer is worn, the fluorescence of the marking agent becomes visible in this case. By means of this concept of an *in situ* wear indication, the use of components can be optimised considerably. Components can be used for longer periods. In effect, excess wear of components can be prevented.

It is also proposed in accordance with the invention to mark a plurality of layers with particles containing different marking agents. In this way, layers and their wear can be shown in a differentiated manner.

Finally, the problem is solved by the use of the marked layer structure of the invention for quality control and/or as a wear indicator and/or as a marker to show that the item is an original. If the particles containing a marking agent are incorporated into, for example, a wearing layer, the intensity of the fluorescence can be used as a wear indicator. If the intensity of the fluorescence declines, conclusions can be drawn from this as to the remaining thickness of the wearing layer and it is possible to estimate whether the component concerned needs to be changed or refurbished.

The intensity of the fluorescence, or the intensity of the signal in general, can be continuously recorded in machines and facilities by means of handy measuring equipment, which is not very complex, consisting substantially of a laser diode and a photodiode.

With suitable optical detectors, it is also possible to measure dynamic properties of the anti-Stokes fluorescence in addition to the intensity of the fluorescence. This enables the specific detection of the anti-Stokes crystals used and hence makes it possible to prove that an item is an original.

A further possible use of the layer structure of the invention is product labelling. Numerous metal components and products which are coated by galvanisation on an industrial scale are the subject of forgery and counterfeiting. The targeted incorporation of anti-Stokes crystals into surfaces is a highly complex process, which is therefore difficult to counterfeit. Especially for metal components, the state of the art does not hold any concepts for practical product labelling.

With the process of the invention, it is, for example, possible for an original manufacturer to ward off unjustified complaints and warranty claims resulting from counterfeit goods. In addition, the marking can be checked in practice by customers using mobile detectors. Counterfeit goods as a whole can be discovered more quickly in this way.

A further application consists in the fact that safety-relevant and/or functionally relevant assemblies and components, especially in aircraft construction, power-plant construction, and plant and mechanical engineering, cannot be placed in operation unless it has been confirmed by detecting the marker that the component is an original and, where applicable, which version it is.

It was surprisingly found by the inventors that the process of the invention makes it possible to produce marked layer structures by means of which the ablation and wear of layers can be efficiently monitored in a simple manner.

Finally, it is preferably contemplated in accordance with the invention that the weight ratio of inert material to marker material is 1:1-10:1, preferably 3:1-5:1.

The inert material is preferably temperature and/or chemical-resistant.

The marking agent is incorporated into the inert material substantially inseparably by annealing, sintering or melting with the inert material.

It is preferable that in order qualitatively and/or quantitatively to detect the marking agent in the use in accordance with the invention, physical methods are used, preferably spectral measurement of the fluorescence or measurement of the rise and decay of the fluorescence, or the emission excited.

The inert material, such as glass and/or ceramic material, is combined with the marking agent by annealing, sintering or melting. This procedure leads to a reduction in the extractability of the marking agent. There can therefore neither be any depletion of the marking agent in the inert material when it is in constant contact with a medium surrounding the particles, nor is the medium itself contaminated. Since glasses and ceramic materials as inert materials are very resistant to attack by almost all media, the extraction resistance of the marking agent can be increased considerably.

The chemical reactivity of the marking agent is reduced by its inclusion in the inert material. Many compounds of metals are capable of acting as catalysts. The introduction of compounds of this kind without any inert material can therefore trigger an unwanted reaction and/or reduce the durability of the systems or preproducts, especially in reactive systems.

Further features and advantages of the process of the invention will become clear from the following detailed description of example embodiments.

As already explained, the inert particles preferably comprise a marking agent in a molten substrate containing boric acid or borax.

It has been found in accordance with the invention that a marking agent which preferably contains a substrate based on boric acid or borax can successfully be incorporated into the bulk of a workpiece or material, so that the marker contained in the substrate is to a certain extent present in the substrate in "vitrified" form after fusing with the substrate, so that it does not migrate and is all in all inert, but that the detection and read-out of the features for the marking are not changed, destroyed, dissolved or rendered illegible.

The substrate is particularly preferably an enamel or ceramic glass frit and particularly preferably contains borax (sodium tetraborate). The substrate materials to be selected in accordance with the invention are commercially available. The markers can be blended into these substrate materials and subsequently molten. Depending on the substrate material or marker used, further auxiliary materials may be added during the production of the marking agent, such as auxiliary materials that change the melting point of the substrate material or alter its viscosity. Known auxiliary materials are, for example, fluorspar, borax, boric acid or alkali carbonate.

The melting to produce the marking agent can be performed continuously or discontinuously in melting furnaces. The corresponding furnaces and crucibles that might be needed are likewise known in the art.

The melts produced can be quenched by pouring them into water or guiding them over chilled metal rolls.

The cooled melts obtained can then be processed into a powder with a particle size suitable for the application. Corresponding grinding processes are likewise known to the person skilled in the art.

Further advantages and features of the invention will become clear from the following description of a preferred embodiment.

### Comparative example

Yttrium oxisulphide, doped with terbium oxide and erbium oxide, is an anti-Stokes pigment which can be used as a marker. This marker can be excited with radiation of an appropriate wavelength, and its fluorescence effects can be detected with a suitable detector, such as a simple imaging camera.

This marker has only limited resistance to acid, such as diluted hydrochloric acid, so that there is a risk that the yttrium will be transformed into a bio-available compound. That is not only undesirable from the medical point of view, but is also prohibited in items of everyday use and children's toys, see DIN EN 71.

### Example

The pigment described above was mixed with a boron frit, such as M9358 (Ferro, Reimbold & Strick) in a ratio of 1:2 to 1:5. The mixture was melted at 1,000° C, and the melt obtained was then quenched by pouring it into water. The glass obtained does not exhibit any solubility of the yttrium, whereas the anti-Stokes effect is preserved.

Particles of aluminium oxide and diamond are already embedded in hard chromium layers in order to improve the mechanical properties of the chromium layer. Ceramically encapsulated anti-Stokes crystals with 3-6 vol. % were mixed into the electroplating baths in these coating processes The ceramically encapsulated markers had a particle size of 2-5 µm.

The ceramically encapsulated markers behaved inertly in the electroplating baths. Nevertheless, they were incorporated over the entire thickness of the layer in accordance with the invention. By separating them into different coating baths, it was equally possible for them to be incorporated into particular layers in a targeted manner. Cross-sections and longitudinal sections of the coated substrates show that the anti-Stokes crystals react to excitation with a suitable laser diode with the known anti-Stokes fluorescence. The anti-Stokes fluorescence can be used for quality control and/or as a wear indicator and/or as a marker showing that the item is an original.

The features of the invention disclosed in the above description, in the claims and in the drawings can be essential to implementing the invention in its various embodiments both individually and in any combination.

## Claims

1. A process for producing a marked layer structure comprising:
a) providing a support;
b) contacting the support with a mixture comprising chemically and/or electrochemically inert particles, in which particles a marking agent is substantially inseparably enclosed by annealing, sintering or melting, whereby the extractability of the marking agent is reduced;
c) electrochemically or chemically coating the support, the inert particles being incorporated into the layer produced by the coating;
wherein the marking agent is a fluorescent material,
wherein the chemical coating is electroless nickel-plating, chromating, enamelling, phosphating, hot dipping metals, sol-gel coating, zinc-coating or tinning.

2. The process as claimed in claim 1, wherein the mixture is a liquid mixture.

3. The process as claimed in either of claims 1 or 2, wherein the particles have a diameter in a range from 0.05-1,000 µm, preferably 1-100 µm, particularly preferably 1-10 µm and even more preferably 0.05-0.2 µm.

4. The process as claimed in any of the previous claims, wherein the inert material has a transparency of greater than 90 % in the wavelength range of 300-1.000 nm.

5. The process as claimed in any of the previous claims, wherein the inert material is glass and/or ceramic material.

6. The process as claimed in any of the previous claims, wherein the marking agent exhibits Stokes or anti-Stokes fluorescence.

7. The process as claimed in any of the previous claims, wherein the inert particles are distributed in the mixture substantially homogeneously.

8. A marked layer structure obtainable by the process as claimed in any of the previous claims.

9. Use of the marked layer structure as claimed in claim 8 for quality control and/or as a wear indicator and/or as a marker to show that an item is an original.

## Patentansprüche

1. Verfahren zur Herstellung einer markierten Schichtstruktur, umfassend:
a) Bereitstellen eines Trägers;
b) Inkontaktbringen des Trägers mit einer Mischung, die chemisch und/oder elektrochemisch inerte Partikel umfasst, wobei in den Partikeln ein Markierungsmittel im Wesentlichen untrennbar durch Glühen, Sintern oder Schmelzen eingeschlossen ist, wodurch die Extrahierbarkeit des Markierungsmittels verringert wird;
c) elektrochemisches oder chemisches Beschichten des Trägers, wobei die inerten Partikel in die durch die Beschichtung hergestellte Schicht eingebaut werden;
wobei das Markierungsmittel ein fluoreszierendes Material ist,
wobei die chemische Beschichtung stromloses Vernickeln, Chromatieren, Emaillieren, Phosphatieren, Heißtauchmetalle, Sol-Gel-Beschichten, Zinkbeschichten oder Verzinnen ist.

2. Verfahren nach Patentanspruch 1, wobei die Mischung eine flüssige Mischung ist.

3. Verfahren nach einem der Patentansprüche 1 oder 2, wobei die Partikel einen Durchmesser im Bereich von 0,05-1.000 µm, vorzugsweise 1-100 µm, besonders bevorzugt 1-10 µm und noch mehr bevorzugt 0,05-0,2 µm aufweisen.

4. Verfahren nach einem der vorhergehenden Patentansprüche, wobei das inerte Material eine Transparenz von mehr als 90 % im Wellenlängenbereich von 300-1.000 nm aufweist.

5. Verfahren nach einem der vorhergehenden Patentansprüche, wobei das inerte Material Glas- und/oder Keramikmaterial ist.

6. Verfahren nach einem der vorhergehenden Patentansprüche, wobei das Markierungsmittel Stokes- oder Anti-Stokes-Fluoreszenz zeigt.

7. Verfahren nach einem der vorhergehenden Patentansprüche, wobei die inerten Partikel in der Mischung im Wesentlichen homogen verteilt sind.

8. Markierte Schichtstruktur, die durch das Verfahren nach einem der vorhergehenden Patentansprüche erhalten werden kann.

9. Verwendung der markierten Schichtstruktur nach Patentanspruch 8 zur Qualitätskontrolle und/oder als Verschleißindikator und/oder als Markierung, um zu zeigen, dass ein Gegenstand ein Original ist.

## Revendications

1. Procédé de production d'une structure de couche marquée comprenant les étapes consistant à :
a) fournir un support
b) mettre le support en contact avec un mélange comprenant des particules chimiquement et/ou électrochimiquement inertes, particules dans lesquelles un agent de marquage est intégré de façon sensiblement inséparable par recuit, frittage ou fusion, ce qui réduit l'extractibilité de l'agent de marquage
c) revêtir électrochimiquement ou chimiquement le support, les particules inertes étant incorporées dans la couche produite par le revêtement ;
dans lequel l'agent de marquage est un matériau fluorescent, dans lequel le revêtement chimique est le nickelage autocatalytique, le chromage, l'émaillage, la phosphatation, le trempage à chaud de métaux, le revêtement sol-gel, le zingage ou l'étamage.

2. Procédé tel que revendiqué dans la revendication 1, dans lequel le mélange est un mélange liquide.

3. Procédé tel que revendiqué dans l'une quelconque des revendications 1 ou 2, dans lequel les particules ont un diamètre compris dans la plage de 0,05 à 1.000 µm, de préférence 1 à 100 µm, plus préférentiellement de 1 à 10 µm et encore plus préférentiellement 0,05 à 0,2 µm

4. Procédé selon l'une quelconque des revendications précédentes, dans lequel le matériau inerte présente une transparence supérieure à 90 % dans la plage de longueurs d'onde de 300 à 1000 µm.

5. Procédé selon l'une quelconque des revendications précédentes, dans lequel le matériau inerte est un verre et/ou un matériau céramique.

6. Procédé selon l'une quelconque des revendications précédentes, dans lequel l'agent de marquage présente une fluorescence de Stokes ou d'anti-Stokes.

7. Procédé selon l'une quelconque des revendications précédentes, dans lequel les particules inertes sont réparties dans le mélange de manière sensiblement homogène.

8. Structure de couche marquée pouvant être obtenue par le procédé selon l'une quelconque des revendications précédentes.

9. Utilisation de la structure de couche marquée selon la revendication 8 à des fins de contrôle de qualité et/ou comme indicateur d'usure et/ou comme marqueur pour montrer qu'un article est un original.
